# EUROPEAN PATENT SPECIFICATION

(11) **EP 2 589 189 B1**
(45) Date of publication and mention of the grant of the patent: **03.09.2014**
(21) Application number: 10737803.6
(22) Date of filing: 01.07.2010
(51) Int. Cl.: H04L 12/701, H04L 12/757, H04L 12/721, H04L 12/773

(54) **METHOD AND APPARATUS FOR DISSEMINATION OF INFORMATION BETWEEN ROUTERS**
VERFAHREN UND APPARAT ZUM VERTEILEN VON INFORMATIONEN ZWISCHEN ROUTERN
PROCEDE ET APPARAIL POUR LA DISTRIBUTION DES INFORMATIONS ENTRE DES ROUTEURS

(43) Date of publication of application: 08.05.2013
(73) Proprietor: Telefonaktiebolaget LM Ericsson (publ), 164 83 Stockholm (SE)
(72) Inventor: CSÁSZÁR, András, H-1125 Budapest (HU); ENYEDI, Gabor Sandor, H-5600 Bekescsaba (HU); KINI, Sriganesh, Fremont CA 94539 (US)
(74) Representative: Blake, Stephen James
(86) International application number: PCT/EP2010/059391
(87) International publication number: WO 2012/000557

(56) References cited:
- EP-A2- 1 107 507
- US-A1- 2005 169 281
- PIM WG MARK HANDLEY/ICIR ISIDOR KOUVELAS/CISCO TONY SPEAKMAN/CISCO LORENZO VICISANO/CISCO: "Bi-directional Protocol Independent Multicast (BIDIR-PIM); draft-ietf-pim-bidir-04.txt" IETF STANDARD-WORKING-DRAFT, INTERNET ENGINEERING TASK FORCE, IETF, CH, vol. pim, no. 4, 26 June 2002 (2002-06-26) , XP015002973 ISSN: 0000-0004 cited in the application

## Description

### Technical field

The present invention relates to a method and apparatus for dissemination of information between routers, particularly where fast dissemination of that information is required or at least desirable.

### Background

Current mechanisms to distribute information to routers multiple hops away involves hop-by-hop protocol-specific control plane processing as well as hop-by-hop control plane forwarding, see for example EP 1 107 507.

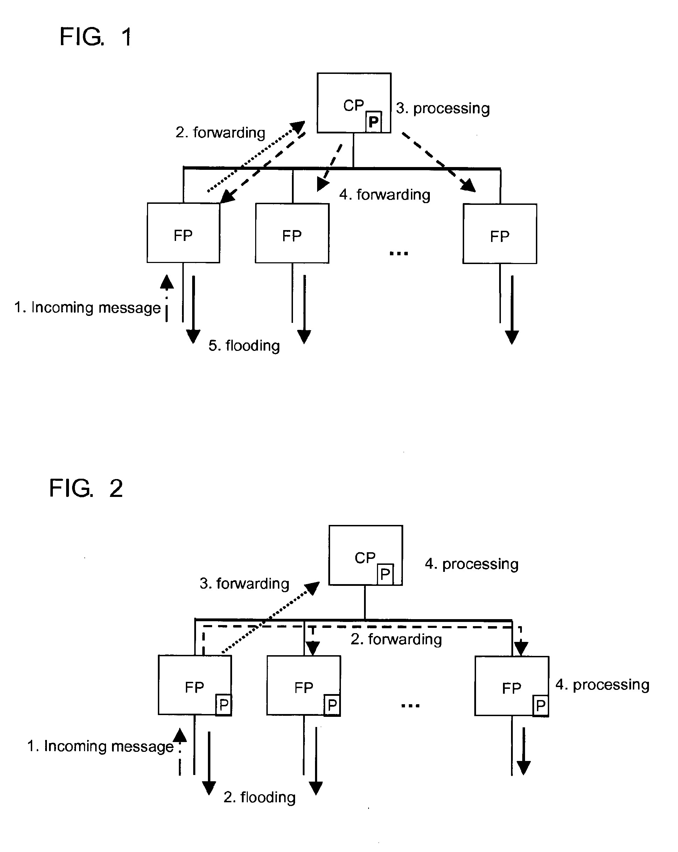

Figure 1 of the accompanying drawings illustrates a process carried out by a previously-considered router. A Forwarding Processor (FP, typically a linecard) receives a notification packet of a protocol in step 1, the notification packet being of a type that needs to be disseminated and processed. The notification is sent to a separate Control Processor (CP) for processing in step 2. The CP processes the packet in step 3, and arranges for the forwarding of the packet to the FPs in step 4, which in turn floods the information to other routers (step 5). Through the processing carried out by the CP, the CP also reconfigures the FPs.

A typical example of an application that sends information to directly connected adjacent neighbors is a link-state routing interior gateway protocol (IGP) such as OSPF (Open Shortest Path First). When conveying a Link State Advertisement (LSA) to all routers in the area, OSPF's flooding algorithm transmits the LSA to its single hop away adjacent neighbor. The received LSA undergoes processing according to OSPF's processing rules and is then forwarded to OSPF neighbors further away from the router originating the LSA.

The present applicant has come to the significant realisation that CP interaction in the above approach presents a problem if the goal is to provide instant flooding of the incoming message (and maybe even instant processing after flooding). If the control plane is involved then reaction times are hard to be guaranteed to be sub-second, never mind in the order of milliseconds that would be desired for carrier-grade fail-over performance.

Current mechanisms to convey such information to routers multiple hops away involves hop-by-hop protocol-specific control plane processing as well as hop-by-hop control plane forwarding. The delay due to control plane's involvement in processing/forwarding adversely affects the goal (e.g. fast convergence).

For example, in case of OSPF, the delay in receiving a LSA at a router is gated by the processing and forwarding speed of the control plane at each hop along a path from the originating OSPF router.

Some applications need to send information to routers that are multiple hops away even though they do not have adjacency relationship with directly connected neighbors. In such cases the forwarding of application messages depends on the forwarding plane being setup by an underlying protocol that has established adjacent neighbor relationship with routers that are a single hop away. In scenarios where the data plane forwarding is changing due to the underlying protocol, the message forwarding speed and reliability is gated by the speed and mechanisms of the underlying protocol's hop-by-hop message processing and forwarding by control-plane.

It is desirable to address the above issues as identified and formulated by the present applicant.

### Summary

According to a first aspect of the present invention there is provided a method for use by a forwarding processor in or to be installed in a router comprising a plurality of forwarding processors. The forwarding processor is configured or responsible for routing (or forwarding) packets to and from other routers. There may be other such forwarding processors in or installed in the router. In step (a), information is received at the forwarding processor which requires dissemination to other routers. The information also requires processing to determine what, if any, reconfiguration of the routing (forwarding) performed by the forwarding processor is required. In step (b) the information is forwarded in a packet to other routers as required according to the routing (forwarding) configuration for the forwarding processor. In step (c) the information is forwarded to at least one other forwarding processor in the router not already in receipt of the information. If an expedited dissemination procedure is required, the above-described steps (b) and (c) are performed before the processing mentioned above (the processing to determine what if any reconfiguration is required) has been performed (completed) and/or before the forwarding processor has been informed of the result of such processing and/or before any reconfiguration required in the forwarding processor has been requested, arranged or performed (completed). The method comprises performing at least part of the processing at the forwarding processor. The method comprises using a notification procedure to notify the result of the processing performed by the forwarding processor to at least one other forwarding processor receiving the information. This may be done, for example, so that processing of the information at the receiving forwarding processor is not required.

At least one of steps (b) and (c) may be performed before the processing has been requested or arranged.

The information in step (a) may be received in a packet from another router.

The information may be forwarded in step (b) and/or step (c) by forwarding the received packet.

The information received in step (a) may be generated internally in response to an event occurring at the forwarding processor.

The method may comprise generating a packet comprising the information and wherein the information is forwarded in step (b) and/or step (c) by forwarding the generated packet.

The method may comprise performing any reconfiguration required in the forwarding processor as a result of the processing performed by the forwarding processor.

The method may comprise using a notification procedure, separate from that involving step (c), to notify the information to the at least one other forwarding processor not already in receipt of the information. This may be done, for example, if the receiving forwarding processor is unable to access or use the information received as a result of step (c).

At least part of the processing may be performed by a processing unit. The processing may be performed by both the forwarding processor and the processing unit, for example first by the forwarding processor and then optionally by the processing unit. The method may comprise forwarding the information to the processing unit for processing. Forwarding to the processing unit may take place before or after step (b), or even concurrently. Forwarding to the processing unit may take place before or after step (c), or even concurrently.

The processing unit may be the same as or form part of the forwarding processor. The processing unit may be separate (e.g. physically separate) from the forwarding processor. There may be a separate processing as well as a processing unit that forms part of the forwarding processor (or is the same as the forwarding processor); in this case the processing unit that forms part of the forwarding processor (or is the same as the forwarding processor) could perform local processing for local reconfiguration (for example if the notification requires this) and the separate processing unit could (optionally) perform a second level of processing, for example to configure the and other forwarding processors.

The processing unit may be part of or installed in the router (i.e. the router may comprise the processing unit). The processing unit may alternatively be situated remote from the router, in a different node entirely. The processing unit may be responsible for, or have overall responsibility for, configuring the routing performed by the forwarding processor.

The information received in step (a) may require dissemination by multicasting, such that step (b) would comprise multicasting the packet.

The routing configuration for step (b) may be a multicast routing configuration based on a sole spanning tree.

The routing configuration for step (b) may be a multicast routing configuration based on a pair of (maximally) redundant trees.

The routing configuration for step (b) may be a multicast routing configuration based on flooding.

The forwarding processor may be or may comprise a Forwarding Processor.

The processing unit may be or may comprise a Control Processor.

The forwarding processor may be a linecard. The linecard may be removable from the router.

The processing unit may be a control card. The control card may be removable from the router.

It may be assumed that an expedited dissemination procedure is (determined to be) required in a method according to the present invention; how it is determined that an expedited dissemination procedure is required can vary from embodiment to embodiment. For example, it may be hard-wired or hard-coded that an expedited dissemination procedure is required (i.e. permanent). Or there could be a flag or switch of some sort to indicate that an expedited dissemination procedure is required. Such a flag or switch can be included in the received packet itself.

For example, the method may comprise determining whether or that the expedited dissemination procedure is required with reference to an IP address of the received packet, for example determining that the expedited dissemination procedure is required if the IP address is a predetermined IP address such as a predetermined multicast IP address.

In other words, it can be considered that in a method or apparatus according to the present invention that steps (b) and (c) are performed, according to an expedited dissemination procedure, before such processing has been performed and/or before the forwarding processor has been informed of the result of such processing and/or before any reconfiguration required in the forwarding processor has been requested, arranged or performed.

For the avoidance of doubt, reference to a first processing unit does not necessarily imply that there is also a second processing unit. The first processing unit may instead be referred to as a routing unit or a forwarding unit, while the second processing unit may instead be referred to as a control unit.

The router may be an IP router such as an IPv4 router or an IPv6 router.

According to a second aspect of the present invention there is provided a forwarding processor for use in or to be installed in a router comprising a plurality of forwarding processors. The forwarding processor is configured or responsible for routing (or forwarding) packets to and from other routers. There may be other such forwarding processors in or installed in the router. The apparatus comprises means for or one or more processors arranged for: (a) receiving information which requires dissemination to other routers and processing to determine what, if any, reconfiguration of the routing (forwarding) performed by the forwarding processor is required; and, if an expedited dissemination procedure is required, performing steps (b) and (c) before such processing has been performed (completed) and/or before the forwarding processor has been informed of the result of such processing and/or before any reconfiguration required in the forwarding processor has been requested, arranged or performed (completed): (b) forwarding the information in a packet to other routers as required according to the routing (forwarding) configuration for the forwarding processor; and (c) forwarding the information to at least one other forwarding processor in the router not already in receipt of the information. The forwarding processor further comprises means for performing at least part of the processing and for using a notification procedure to notify the result of the processing performed by the forwarding processor to at least one other forwarding processor receiving the information, for example so that processing of the information at the receiving forwarding processor is not required.

According to a third aspect of the present invention there is provided a program for controlling an apparatus to perform a method according to the first aspect of the present invention or which, when loaded into an apparatus, causes the apparatus to become an apparatus according to the second aspect of the present invention. The program may be carried on a carrier medium. The carrier medium may be a storage medium. The carrier medium may be a transmission medium.

According to a fourth aspect of the present invention there is provided an apparatus programmed by a program according to the third aspect of the present invention.

According to a fifth aspect of the present invention there is provided a storage medium containing a program according to the third aspect of the present invention.

Further aspects of the present invention are as the aspects above, but in which the forwarding processor is configured for routing (or forwarding) packets to and from other routers *by* a processing unit, and in which the information received by the forwarding processor requires processing *by the* processing unit to determine what, if any, reconfiguration of the routing (forwarding) performed by the forwarding processor is required.

An embodiment of the present invention offers a technical advantage of addressing the issue mentioned above relating to the prior art. Technical advantages are set out in more detail below.

### Brief description of the drawings

Figure 1, discussed hereinbefore, illustrates a previously-considered process in a router for flooding information;
Figure 2 illustrates a modified process for distributing information according to an embodiment of the present invention;
Figure 3 illustrates steps performed according to an embodiment of the present invention;
Figure 4 is a schematic block diagram illustrating parts of an apparatus according to an embodiment of the present invention;
Figure 5 is a schematic flow chart illustrating steps performed by an apparatus embodying the present invention;
Figure 6 illustrates FPN along a spanning tree;
Figure 7 illustrates a pair of redundant trees;
Figure 8 illustrates schematically parts of an Ericsson (RedBack) SmartEdge router; and
Figure 9 illustrates the concept of replicas and loop-back.

### Detailed description

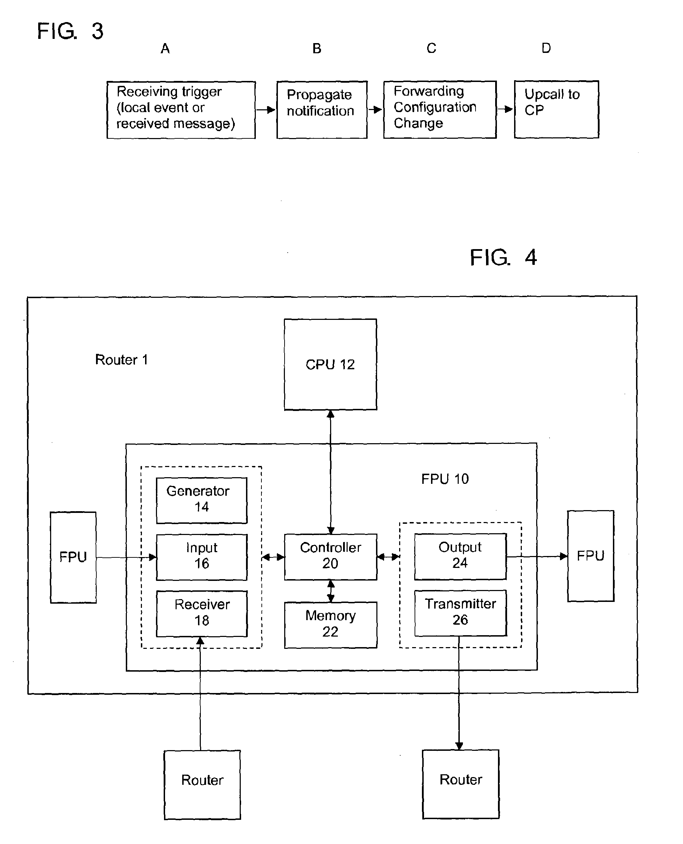

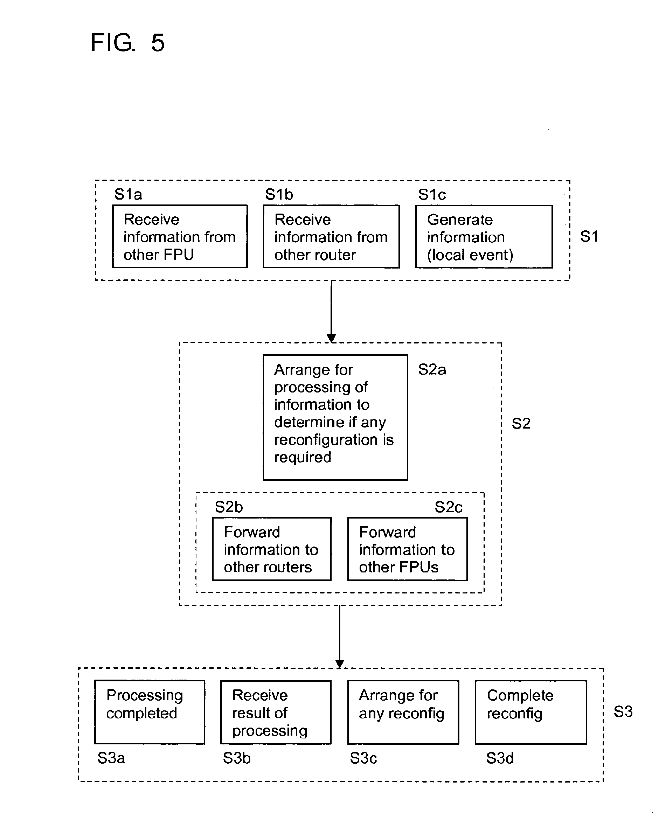

Before a specific description of an apparatus and method embodying the present invention with reference to Figures 4 and 5, an overview will first be provided.

An embodiment of the present invention proposes to handle advertising and forwarding notifications according to an expedited dissemination procedure. This may be referred to dissemination or propagation in the fast path. The underlying aim is that notifications should reach each (intended) node reliably with minimal-to-no processing in each hop.

The sort of critical event that might need notification to be propagated in the fast path would typically be a failure event. However, the technique would also apply to other types of event. For example, this fast path notification (FPN) technique could be used for real-time traffic engineering by rapidly changing paths in order to realize load sharing (packets in the buffer of some router(s) reaching a predefined number can be a trigger).

Figure 2 illustrates schematically a process for disseminating information according to an embodiment of the present invention, and is intended to act as a comparison with Figure 1 discussed above. In the process illustrated in Figure 2, following receipt in step 1 at the Forwarding Processor of a notification packet which needs to be disseminated and processed, the FP notification packet is forwarded directly in step 2 to the other FPs, in this illustration bypassing the CP entirely. This is in contrast to Figure 1, where the notification packet is forwarded to the other FPs only after processing by the CP.

Around the same time as forwarding the notification packet is forwarded to the other FPs (and hence also indicated as being step 2 in Figure 2), the notification packet is flooded to other routers by the first FP and other FPs that are in receipt of the notification packet from the first FP. This ensures very rapid dissemination of the critical information in the notification packet. Local internal reconfiguration of the FP can also be performed rapidly.

Only then is the notification packet forwarded in step 3 up to the CP for processing in step 4. Following that, the CP processes the notification packet in step 4 and then arranges for any configuration of the FPs required by the notification packet. It is to be noted that step 4 (i.e. the mere sending of the notification packet to the CP) can happen concurrently with or even before step 2, so long as processing by the CP does not delay step 2. Step 2 can happen at least partly in parallel with step 3 and/or 4, but for any benefit to be achieved by the present invention step 2 must be complete before step 4 does (or at least before the result of the processing is notified to the FPs or before any resulting reconfiguration of the FPs is arranged or performed).

In a router, the control plane processor/card (CP) runs the well known routing protocols and calculates the necessary information for forwarding (routing table). An optimised variant of the routing table (i.e. the forwarding table) is then downloaded to the linecards (forwarding engine, forwarding processor, data plane, FP, etc.). The linecard using this information can forward packets in an efficient and quick way to guarantee the line speeds required.

A single router may incorporate several linecards (several FPs). A packet coming in on one FP may be forwarded using another port on the same FP or onto another FP. A router could operate with a single linecard.

Steps performed in each forwarding engine (FP) are illustrated schematically in Figure 3.

Referring to step A, the incoming trigger may be a received fast notification message (remote event) or the trigger may be the detection of a local event. If the trigger is a message, the message header will be the hint that a fast path notification has arrived (e.g. special multicast destination address and/or special IP protocol field). Either a local event or the remote notification case requires the information to be rapidly forwarded to the rest of the network.

Referring to step B, in each hop the primary task is to propagate the notification further to selected neighbours. Within the node, this task is based on multicast; that is, the packet needs to be multicasted to a selected set of neighbours (see next chapter about details).

Referring to step C, processing of the notification is begun within the linecard if the router is subscribed for this notification and if the FP is prepared for making forwarding configuration changes. (For instance, the reaction to a notification indicating a remote failure may be the reconfiguration of the forwarding table.)

Referring to step D, if the node is subscribed to the notification, it is sent to the control plane, which can run its own process. For instance, it may reconfigure itself or it may undo the forwarding configuration changes made within the linecard.

Currently, typical IP routers have multiple separate forwarding processors (FP) and a sole control processor (CP). These forwarding processors are usually called linecards. Typically, there is more than one CP for providing failure toleration, but only one of them is active. Furthermore, a CP may have multiple CPUs. The FPs are responsible for transporting or routing traffic, while the CP is responsible for configuring the FPs and running the required control protocols, like routing protocols. Thus, events causing reconfiguration are, in previously-considered implementations, always forwarded and processed by the CP, as it is depicted in Figure 1. Such a typical event is a notification of a topology change (resulting in an OSPF LSA or an IS-IS LSP update) caused by some failure.

However, as discussed above, this scheme can cause extra delay due to the need of communication between the CP and FPs. Unfortunately, when the notification carries critical information, e.g. in the case of a failure, this delay is not acceptable.

The idea underlying an embodiment of the present invention is that it is not necessary to forward all the notifications immediately to the CP, but some can be kept on the "fast path". The FP can attempt to react to the notification on its own, and the CP is notified only after that (if at all; in certain implementations the processing could be carried out entirely at the FPs).

Since there are typically multiple FPs in a router, the FP receiving the notification informs the other ones. The notification may have an impact on each of them, e.g. because each FP has its own replica of the forwarding configuration. This can be done either by a special notification mechanism between the FPs of the same router, or by simply forwarding the same packet to the others. The former would be appropriate when the configuration of the FPs is such that it is not possible to access the appropriate information in the forwarded packets, for example if the FP is set up such that the receiving unit at the FP is not capable of reading the content of a message but merely capable of forwarding the message according to a routing table. In that case, a separate notification mechanism might be used to forward the information to the other FPs, so that those other FPs would receive that information in a manner in which enables them also to access the information.

Packets carrying the notification should ideally be easily recognizable for the linecard. For this purpose a special IP destination address can be used. Moreover, this special IP address is preferably a multicast address, since there may be some third party nodes in the network that do not explicitly support the fast notification mechanism. If multicast is used, even though such third party nodes cannot process these messages they can at least send the packets to their neighbours if the given multicast group is properly configured. This special multicast group (multicast destination IP address) can be donated as "MC-FPN".

Multicast is preferred over simple broadcast since this way the propagation of the notification can be limited e.g. to the local routing area. Another reason is that it is not needed to send it interfaces e.g. facing customer networks or interfaces where there are no routers, but hosts only.

The FPN message can contain the following descriptors and content:
(a) Resource ID: a key uniquely identifying a resource in the network about which the notification contains information
(b) Instance ID: this field is responsible to identify a specific instance of the notification. For the same resource, multiple notifications may be sent after each other (e.g. a notification about a "down" event than another notification for an "up" event), hence nodes might need to know which information is the most recent. This field may be a timestamp set at the originator or a sequence number.
(c) Event code: this field is responsible for disclosing what has happened to the element identified by the above Resource ID.
(d) Info field: this field may contain further data, depending on the application of the FPN service. It may be empty if not needed.

Figure 4 is a schematic block diagram illustrating parts of a router 1 according to an embodiment of the present invention. Figure 5 is a schematic flow chart illustrating steps performed by the first processing unit 10 of Figure 4.

The router 1 comprises a first processing unit (FPU) 10 and a second processing unit (CPU) 12. Three such first processing units are illustrated within the router 1, though the detail of only one of the first processing units is shown. Two other routers are also illustrated in Figure 4, without any internal detail. The first processing unit 10 can be considered as being equivalent to a linecard or forwarding processor described elsewhere herein. The second processing unit 12 can be considered as being equivalent to a control card or control processor described elsewhere herein.

The first processing unit 10 comprises a generator 14, input 16 and receiver 18. These three parts can collectively be considered as parts for receiving information which requires dissemination to other routers and processing to determine what, if any, reconfiguration of the routing performed by the first processing unit 10 is required.

The first processing unit 10 also comprises an output 24, and transmitter 26. These two parts can collectively be considered as parts for forwarding or disseminating the information.

The first processing unit 10 also comprises a controller 20 and memory 22. The controller 20 is responsible for controlling the operations of the first processing unit 10, in particular the operations carried out by the information receiving and disseminating parts described above, and for communicating with the second processing unit 12. The controller 20 has the memory 22 available to it for storing routing configurations and so on. In general, the first processing unit 10 is configured for routing packets to and from other routers, and the configuration settings for this can be stored in the memory 22.

Referring to in Figure 5, in step S1 information is received which requires dissemination to other routers and processing to determine what, if any, reconfiguration of the routing performed by the first processing unit 10 is required. This information can be received in a number of different ways, as illustrated by steps S1a, S1b and S1c, which are considered to be part of step S1.

The information can be received in step S1a at the input 16 from another first processing unit (e.g. as part of a similar method being performed at the other first processing unit). The information can be received in step S1b, in a notification packet, at the receiver 18. The information can also be generated internally in step S1c by the generator 14 in response to an event occurring at the first processing unit 10.

Steps S2a, S2b and S2c are considered to be part of step S2. Steps S2a, S2b and S2c are grouped in this way because the order of performance of these steps is not considered to be of importance. For example, one or both of steps S2b and S2c can be performed before step S2a, but this need not be the case.

In step S2a the controller 20 arranges for the processing of the information received in step S1 to determine what, if any, reconfiguration of the routing performed by the first processing unit 10 is required. This processing can either be performed at the first processing unit 10 (e.g. by controller 20) or at the second processing unit 12, or a combination of these. If at least part of the processing is performed by the second processing unit 12, then the arranging step S2a comprises forwarding the information to the second processing unit 12.

In step S2b the information is forwarded by transmitter 26 in a packet to other routers as required according to the routing configuration for the first processing unit 10 stored in the memory 22. Where the information was received in step S1 in a packet from another router, step S2b may comprise forwarding the received packet. Where the information was received in step S1 by way of internal generation, step S2b may comprise the controller 20 generating a packet including the information and forwarding the generated packet.

In step S2c the information is forwarded by output 24 to another first processing unit in the router 1 not already in receipt of the information (if there are no other first processing units in the router 1 then this step is not performed). Where the information was received in step S1 in a packet from another router, step S2c may comprise forwarding the received packet. Where the information was received in step S1 by way of internal generation, step S2c may comprise the controller 20 generating a packet including the information and forwarding the generated packet.

Steps S3a, S3b, S3c and S3c are considered to be part of S3. Steps S3a, S3b, S3c and S3c are grouped in this way because they are inter-related in that they follow from the performance of the processing arranged in step S2a.

In step S3a the processing of the information has been completed (this is not an explicit step, but rather happens implicitly at completion of the processing). In step S3b the first processing unit 10 receives the result of the processing. For that part of the processing performed at the second processing unit 12, the results are received at the controller 20 from the second processing unit 12. For that part of the processing performed at the first processing unit 10 itself, the results are received internally (e.g. at the controller 20); there is no need for any communication as such of the results, except perhaps from one part of the first processing unit 10 to another.

In step S3c it is arranged for any reconfiguration of the routing performed by the first processing unit 10 which is indicated as being required by the results of the processing, whether that processing was carried out at the first processing unit 10 or the second processing unit 12 or both. In step S3d the reconfiguration is completed (e.g. by storing a new routing table in the memory 22).

Although it is stated above that the order of performance of steps S2a, S2b and S2c is not considered to be of importance, if it is determined that an expedited dissemination procedure is required according to an embodiment of the present invention, it is a requirement that steps S2b and S2c (grouped under step S2) are performed before step S3a and/or before step S3b and/or step S3c and/or step S3d (grouped under step S3). Step S2a (grouped under step S2) must inevitably happen before those steps grouped under step S3.

As regards the determination of whether the expedited dissemination procedure is required, this may be done with reference to an IP address of the received packet. For example is may be determined that the expedited dissemination procedure is required if the IP address is a predetermined IP address such as a predetermined multicast IP address.

Where at least part of the processing of the information is performed at the first processing unit 10, a notification procedure may be used to notify the result of the processing performed by the first processing unit 10 to at least one other first processing unit receiving the information, for example so that processing of the information at the receiving first processing unit is not required.

Another form of notification procedure, separate from that involving step S2c, may also or instead be used to notify the information to the at least one other first processing unit not already in receipt of the information, for example if the receiving first processing unit is unable to access or use the information received as a result of step S2c.

The information received in step S1 would typically require dissemination by multicasting, so that step S2b would comprise multicasting a packet comprising the information.

Three options for the routing configuration to be employed will now be described: (A) multicast on a Sole Spanning Tree; (B) multicasting on a pair of Redundant Trees; and (C) flooding through multicast.

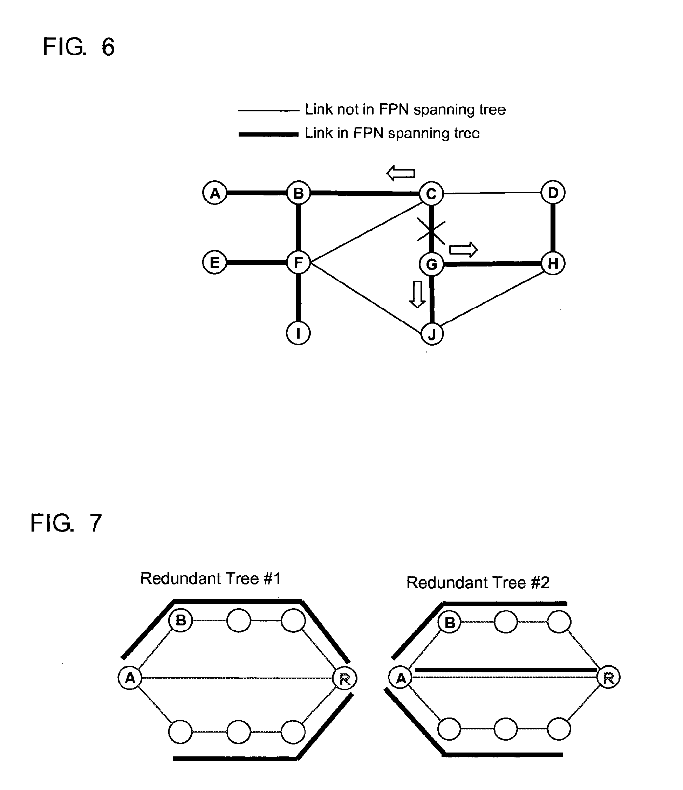

Firstly, option (A) will be considered and discussed with reference to Figure 6. The fast path notification may commence on a simple spanning tree covering all router within an area with a specially allocated multicast destination IP address.

The tree should be consistently computed at all routers. For this, the following rules may be given:
The tree can be computed as a shortest path tree rooted at e.g. the highest router-id.
When multiple paths are available, the neighbouring node in the graph e.g. with highest router-id can be picked. When multiple paths are available through multiple interfaces to a neighbouring node, e.g. a numbered interface may be preferred over an unnumbered interface. A higher IP address may be preferred among numbered interfaces and a higher ifIndex may be preferred among unnumbered interfaces.

Note, however, that the rules should be consistent among node. That is, a router may pick the lower router IDs if it is ensured that ALL routers will do the same to ensure consistency.

During tree computation only routers that are capable of this FPN service are picked if possible. The capability of the node to compute such a tree is advertised through a capability option in the LSA/LSP as described below.

Multicast forwarding state is installed using such a tree as a bi-directional tree. Each router on the tree can send packets to all other routers on that tree.

Note that the multicast spanning tree can be also built using BIDIR-PIM [Handley et al: "Bidirectional Protocol Independent Multicast (BIDIR-PIM)", IETF RFC 5015] so that each router within an area subscribes to the same multicast group address. Using BIDIR-PIM in such a way will eventually build a multicast spanning tree among all routers within the area. (BIDIR-PIM is normally used to build a shared, bidirectional multicast tree among multiple sources and receivers.)

About the bidirectional multicast spanning tree, be it built using the above mechanism or by BIDIR-PIM: note that even in the light of any single node or link failure, the nodes adjacent to the failure are able to inform other nodes, which are on their side of the failure.

This is apparent from a review of Figure 6. If the link between nodes C and G fails, node C is capable to notify one part of the network, node G is capable to notify the other part.

In case of multiple uncorrelated failures, however, it is not guaranteed that each node in the network can be notified about each failure. For example, if two links C-G and B-C go down parallel, node B can notify the nodes on the left hand size about the failure B-C but notifications about the C-G failure will not get through to B. Also, node G can notify the nodes on the right hand side about the link failure G-C but notifications about B-C will not get through to these nodes.

On the other hand, if failures of link B-C and C-G are correlated and preparing for that the operator configured them to be part of an SRLG (Shared Risk Link Group), then, again, every node will learn the failure of the SRLG from the notifications on the remaining parts of the tree.

The advantage of option (A), thus, is that after configuring the multicast tree, the forwarding mechanism is basically a fast path multicast along the tree, already implemented by router vendors. Moreover, it enables full notification (i.e. notification reaching each node) in case of (and about) any single failures and even in case of multiple failures if they are part of an SRLG.

Now, option (B) will be considered. In case of option (A) not exactly the same data is received by each node if there is a failure on the spanning tree. Let us consider first that there is a failure of a link not on the spanning tree, e.g. C-F. Using option (A), each node learns that F has lost connectivity to C and also that C has lost connectivity to F. That is, each node receives two units of data. If, however, a link on the spanning tree goes down, or any one of the nodes goes down (given that each node is on the spanning tree), the tree will be split into multiple components. Each component will learn only one unit of data. For some applications, this may be enough. If this is not enough, then a single spanning tree is not enough.

If an FPN application needs that the exact same data is distributed in the case of any single node or any single link failure, the FPN service should be run in "redundant tree mode".

A pair of "redundant trees" ensures that at each single node or link failure each node still reaches the common root of the trees through either one of the trees. A redundant tree pair is a known prior-art theoretical object that is possible to find on any 2-node connected network. Even better, it is even possible to find maximally redundant trees in networks where the 2-node connected criteria does not "fully" hold (e.g. there are a few cut vertices) [M. Médard et al: "Redundant trees for preplanned recovery in arbitrary vertex-redundant or edge-redundant graphs." IEEE/ACM Transactions on Networking, 7(5):641_652, Oct 1999][G. Enyedi et al: "On Finding Maximally Redundant Trees in Strictly Linear Time", IEEE Symposium on Computers and Communications, ISCC, Sousse, Tunisia, July 2009][G. Enyedi et al, Finding Multiple Maximally Redundant Trees in Linear Time, Submitted to Periodica Polytechnica Electrical Engineering 2010. available online: http://opti.tmit.bme.hu/~enyedi/PhD/distMaxRedTree.pdf].

Note that the referenced algorithm(s) build a pair of trees considering a specific root. The root can be selected in different ways, the only thing that is important that each node makes the same selection, consistently. For instance, the node with the highest or lowest router ID can be used.

Building of the redundant trees has a special constraints: a (maximally) redundant tree pair is needed, where in one of the trees the root has only one child. Fortunately, algorithms presented in the two Enyedi et al documents mentioned above produce such trees.

The method is:
- at failure: each node detecting the failure multicasts the notification on both trees, if it is possible; observe that forwarding notification along one of the trees remains possible in the case of a single failure.
- each node: multicast forward the received notification packet (naturally on the same tree)
- root: perform as every other node plus multicast notification also on the other tree! (i.e. replace destination address identifying the other multicast distribution tree)

Naturally, when the network remains connected and the root remains operable after a single failure, the root will be reached on one of the trees. Thus, since the root can reach every node along at least one of the trees, all the notifications will reach each node. However, when the root is failed, the maximally redundant tree, in which the root has only one child, remains connected, thus, all the nodes can be reached along that tree.

For example, in Figure 7, if link A-B fails, the notifications originating from node B (e.g. reporting that the connectivity from B to A is lost) will reach R on tree #1. Notifications originating from A (e.g. reporting that the connectivity from A to B is lost) will reach R on tree #2. From R, each node is reachable through one of the trees, so each node will be notified about both events.

Note that in option (B) it may happen that the same notification is received four times, once on each tree. As the number of duplicates has a hard bound (i.e. two), this is not a problem and does not need special handling.

Now, option (C) will be considered.

In order to ensure that each node receives the notification in any kind of failure case as long as physical connectivity exists in the network, another failure propagation mechanism can be used instead of the spanning tree: "classic" flooding.

Flooding is a procedure where each node replicates the received notification to each of its neighbours, i.e. to each interface where there is a router within the area, except to that from where it was received.

Routers should be configured in such a way that each router's each router-to-router interface within the same area is subscribed to the special MC-FPN multicast group. This is needed so that a router will replicate the notification to all of its neighbour routers by assuming that the router is multicast-capable. (Note also that this can be done on legacy routers, too, see below.)

Option (C) has another advantage: notifications reach every router on the shortest (or rather fastest) path. In option (A), two physical neighbours may be relatively far away on the spanning tree, thus the information propagation between may take somewhat longer than with option (C).

It can be seen, however, that flooding may result in the same notifications being received multiple times due to loops. For instance, in Figure 6, node J would replicate any notification it received from node G towards node H and node F as well. This effect might be extensive and multicasting a looped notification packet further increases the superfluous load. In order to remedy this, the simple multicasting procedure must be extended with a duplicate check before multicasting the received notifications.

Regarding duplicate checking, any FP, whenever it has performed the flooding of the notification, has to store the pair {Resource ID; Instance ID} in a list (a memory location), so that whenever a new notification message arrives, it can be queried.

The entry can be removed from the list:
- with the help of a timer; or
- when the anti-event notification is received (e.g. link "up" notification for a previous "down" event for the same link)
- when the control plane has performed the final re-configuration.

If a notification is received and if an element is found in the list with same {Resource ID; Instance ID} pair, the notification is discarded as it has been handled before.

Note that it is presumed that there will be very few entries in this list, since only the critical events must be stored, which have not been handled by a control plane protocol. E.g., when fast notification is used for advertising a failure, the list is always cleared by the CP, when OSPF or IS-IS reconfigures the network (so in this case, the list contains only those changes, which took place since the last known topology was advertised). Thus, finding an element in this list can be done very fast, and duplicate check cannot significantly delay propagation. The small expected size means that it can likely be stored in a fast part of the RAM (e.g. in the SRAM).

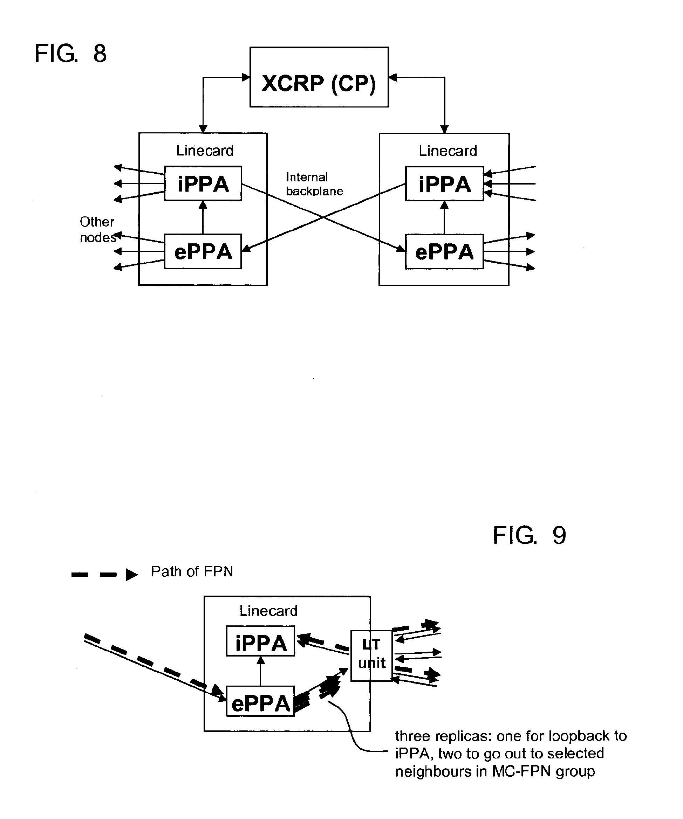

Observe that multicasting packets is done exclusively by the FP, which received the notification, in order to ensure that all the neighbouring nodes are informed about the failure as soon as possible. However, multicasting the packet to other nodes through other FPs does not necessarily mean that other FPs themselves are informed. As an example, consider the architecture of the Ericsson (formerly RedBack) SmartEdge router as depicted in Figure 8.

In SmartEdge, each FP, i.e. each linecard, contains two Packet Processing ASICs (PPA): an iPPA and an ePPA. The iPPA is responsible for receiving packets, and selecting the outgoing interface for them, while the ePPA handles the packets on the outgoing linecard (it is responsible for some post routing tasks like traffic shaping, queuing, etc.). When one of the linecards receives the notification, its iPPA first multicasts the packet, which means that it sends the packet to each ePPAs and the ePPAs send the packet to the multicast neighbours determined by the MC-FPN group.

In many cases it is quite likely that the notification needs to be learnt by the iPPA of the other linecards so that they can make forwarding configuration changes triggered by the notification. With the simple fast path multicasting, the other iPPAs will not receive the notification; this task may need to be done after multicasting the notification is finished. This can be done by a direct interface between the ePPA and the iPPA, if such an interface exists.

Alternatively, one replica of the FPN packet, sent out from the ePPA, can be enforced to be looped back to the iPPA from the line termination unit associated with the outgoing port, as illustrated in Figure 9.

Naturally, for certain hardware, multicasting the packet and notifying other FPs may be done in the same time.

The FP can start processing the notification (if it is setup to do so) only when all the other entities (except the CP) have been notified, since it can take more time.

Finally, after the FP performed the reconfiguration (if at all), the CP can be notified, if necessary.

It is up to the discretion of the vendor whether all the FPs notify the CP or only one. A notification from each FP is a good idea for signalling the CP which FP is ready, but it is not required by this invention; it is enough when only one of the FPs notify the CP.

This upcall to the CP is also useful because the CP then has a chance to override the FP switch-over. For example, if the routing protocol is not notified about the failure in the control plane using traditional methods for a longer period, the CP might decide to write back the original forwarding configuration to the FPs.

Note that whether one or both of
- Local processing within the linecard (fast path processing)
- Upcall to CP for CP processing
happens completely depends on the application which uses the FPN service and should be configurable.

One more consideration relates to the process of ensuring that notifications reach each intended router even if there are packet drops. Two proposals are presented below for all the previously-described options (A), (B) and (C).

Note that explicitly ensuring reliability may not be required in certain network scenarios, where the probability of losing an FPN packet is negligible. This may be the case if FPN packets, being network control packets, are given high priority (e.g. "Network Control" traffic class as per RFC4594).

In the case of option (C), an FPN packet likely reaches each node multiple times. So in this case, even if a packet is lost on an interface, the neighbour node will likely get it from other neighbours.

Therefore, these reliability extensions are proposed to be optional and configurable. Note that these extensions are completely independent; it is possible to use only one of them, or to use both of them in the same time.

The first proposal builds on detecting the loss of a notification using explicit Acknowledgements. First of all, after receiving an external notification (i.e. not one from another FP) and after performing the multicast, an FP has to send an ACK packet back to the node from where it got the notification in order to acknowledge that the notification was received. Note that ACK is only sent to the previous hop neighbour (and not to the remote originator of the notification, for instance). The ACK packet contains the {Resource ID; Instance ID} pair from the processed notification and its own node ID. The destination of ACK packet is set based on the incoming FPN packet's lower layer source address (e.g. source MAC address). Note that an ACK is always sent as a response, even if the FPN packet was already received earlier. Note that the source IP address of FPN packets is the originator's IP address, not the previous hop.

On the transmission side, the FP which replicates the FPN packet to one or more neighbour nodes has to maintain a retransmission list with entries of {Neighbour ID, {Resource ID; Instance ID}, Timestamp}. The list contains those FPNs which were transmitted but which were not acknowledged. If an ACK is received for a given {Resource ID; Instance ID} pair from a given neighbour, the entry is removed from the retransmission list.

At each transmission a Timestamp value is set, which describes the time, when the FPN package should be resent if no ACK is received by that time. Naturally, this Timestamp must be rather close in time to the actual time, perhaps only a few milliseconds away, in order to ensure rapid notification. Moreover, there is a sole (probably hardware) timer, which is always set to the minimum of the Timestamp values contained in the transmission list. When this timer fires, the FP checks the retransmission set, whether there are FPN packets to be resent, and sets the timer to the new lowest Timestamp.

If a linecard with separated ingress and egress processing parts, like that shown in Figure 8, receives an FPN_ACK packet, this can be detected e.g. from a special protocol type, it has to pass this packet to its egress processing part, which maintains the FPN retransmission lists. Naturally, the egress part of the FP (e.g. the ePPA) does not need to forward the FPN_ACK packet anywhere, it only needs to process it by removing the corresponding entry from the retransmission list.

In a second proposal, and as an alternative to using acknowledgements, when highly reliable fast flooding is needed, FPN packets may be sent multiple times (configurable, e.g. two or three times) after each other with a minimal interval between them (e.g. 1 ms).

Combining this with high packet priority likely results in negligible probability that each FPN packet is lost.

The advantage of this option is that using acknowledgements there is no real-time guarantee that a notification gets to the neighbour in time. In contrast, by sending the FPN package multiple times, the probability of slow propagation can be decreased to an arbitrary low level.

Third party node support will now be addressed. As partly mentioned earlier, any router is capable to perform the multicast forwarding of the notifications. The only prerequisite is that for the given destination multicast address selected interfaces of the 3^{rd} party router have to be subscribed. In that case, the router will send any packet received at the given multicast group to these selected interfaces except from where it was received. For Option (A) and Option (B), the selected interfaces are those on the tree(s). Moreover, for Option (B) the root of the trees must support FPN, since it needs to forward packets received on one tree to the other. For Option (C), all interfaces are selected where there are other neighbour routers within the same area (loops could result in that two legacy routers ping-pong the packet to each other; so at least the incoming interface should be skipped - this behaviour is achieved if all interfaces are subscribed to a bidir multicast group).

Alternatively, the 3^{rd} party node might support RFC 5015 [Handley et al: "Bidirectional Protocol Independent Multicast (BIDIR-PIM)", IETF RFC 5015], Bidirectional Protocol Independent Multicast. As mentioned earlier, the multicast spanning tree (Option (A)) can be set up this way.

What is important to handle is that even though such nodes can forward the notification, they will not process it. Such legacy nodes will behave after forwarding the notifications exactly in the same way as before forwarding the notification. Therefore, FPN-capable nodes, which process the notification and change their configuration, may need to take into account that some other nodes do not process the notifications. That is, FPN-capable nodes may need to know, depending on the application, which nodes are (non-)FPN-capable. The capability of fast path notification can be signalled separately or can be included in OSPF-TE or ISIS-TE's Node Capability descriptor, see RFC5073. Both protocols have free bits that could be allocated for this feature. Otherwise a very similar capability advertisement can be employed.

Incidentally, it is mentioned above that the receiving FP could notify the other FPs using a special notification mechanism. In this respect, the idea is still that these FPN notification packets are simply forwarded along a pre-programmed path (e.g. with plain multicast forwarding), i.e. FPs deal with these packets.

The idea is that the FPs forward these packets first (forwarding-only = Fast path). However, there is still the task of dealing with the information contained within the packet. While or after forwarding the packet, the FP also catches it for local parsing, sending up to the control plane or to make local changes within the FP. Therefore, the FPs might need the information themselves to process on their own. In a typical router implementation it is often easy to catch the packet coming from an external source, so the receiving FP can do it. But the information is needed by the other FPs, too, if they themselves also need to perform self-adjustments (e.g. in their own local forwarding tables).

One solution would be that the first-recipient FP forwards the received FPN packets to all other FPs and then the first FP starts processing it locally. Similarly, all the other FP look out for FPN packets and after forwarding to external next-hops as needed they also catch a copy for local processing. But in a typical router implementation it has been seen that it may be much harder to catch an outgoing packet than an incoming packet. So, if this option is not possible, the other way would be that the first recipent FP forwards as well as processes the packet, while all other FPs only forward it. But, the first recipient FP, after forwarding, uses some internal interface to notify other FPs about the contents. A typical router might have proprietary signalling methods, such that signalling information from one FP could quickly reach another FP.

A technique according to an embodiment of the present invention enables very fast advertisement of crucial information in the network. On current platforms it is arguable that it is not possible to do it any faster (the speed of light and line rates limit propagation). The technique requires only minimal additional processing, done only in the linecard and on the fast path.

Applications of an embodiment of the present invention could be:
- Routing protocol extension for fast convergence (fast delivery of link state advertisements)
- IP fast re-route
- Quick advertisement of imminent congestion (e.g. in networks where path establishments take into account bandwidth state, a sudden and drastic increase of link utilisation could be advertised quickly for routers to avoid congestion)

An embodiment of the present invention can be used to perform fast flooding of OSPF LSAs (and ISIS LSPs) using the FPN service. This fast flooding can be used to achieve IGP fast convergence. Such a fast convergence will have a highly reduced micro-loop problem due since the differences between different nodes starting the SPF is the minimum possible i.e., the propagation delay between nodes.

A FPN packet is pre-programmed at each node by its CP, so that the FP knows that upon e.g. a link failure it has to send an FPN with these contents.

Recipient nodes, when processing the FPN packets would re-construct the LSA to be sent up to their CPs.

Another use-case for the FPN service could be fast failure notifications to facilitate advanced IP Fast Reroute mechanisms.

Such a failure notification is assumed in the IP Fast ReRoute (IPFRR) solution of Hokelek et al. [Hokelek et al: "Loop-Free IP Fast Reroute Using Local and Remote LFAPs", hftp://tools.ieff.org/htmi/draft-hokelek-rifap-01]. The IPFRR method or any similar future methods are only feasible if the failure notifications propagate extremely fast through the network, i.e. not as slow as traditional control plane based message propagation.

Resource ID can be a globally agreed identifier of the link or node. The instance ID can be a sequence number (e.g. started from zero at bootup) or a timestamp. Event code can indicate whether the resource is "up" or "down".

It will be appreciated that operation of one or more of the above-described components can be provided in the form of one or more processors or processing units, which processing unit or units could be controlled or provided at least in part by a program operating on the device or apparatus. The function of several depicted components may in fact be performed by a single component. A single processor or processing unit may be arranged to perform the function of multiple components. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims.

## Claims

1. A method for use by a forwarding processor in a router comprising a plurality of forwarding processors, the forwarding processor being configured for routing packets to and from other routers, and the method comprising:
(a) receiving information which requires dissemination to other routers and processing to determine what, if any, reconfiguration of the routing performed by the first processing unit is required; and
if an expedited dissemination procedure is required, performing steps (b) and (c) before such processing has been performed and/or before the forwarding processor has been informed of the result of such processing and/or before any reconfiguration required in the forwarding processor has been requested, arranged or performed:
(b) forwarding the information in a packet to other routers as required according to a routing configuration for the forwarding processor based on one of a bidirectional multicast on a sole spanning tree, multicasting on a pair of redundant trees and flooding through multicast; and
(c) forwarding the information to at least one other forwarding processor in the router not already in receipt of the information
the method further comprising performing at least part of the processing at the forwarding processor and using a notification procedure to notify the result of the processing performed by the forwarding processor to at least one other forwarding processor receiving the information, for example so that processing of the information at the receiving forwarding processor is not required.

2. A method as claimed in claim 1, wherein at least one of steps (b) and (c) is performed before the processing has been requested or arranged.

3. A method as claimed in claim 1 or 2, wherein the information in step (a) is received in a packet from another router, and optionally comprising determining whether the expedited dissemination procedure is required with reference to an IP address of the received packet, for example determining that the expedited dissemination procedure is required if the IP address is a predetermined IP address such as a predetermined multicast IP address.

4. A method as claimed in claim 1 or 2, wherein the information received in step (a) is generated internally in response to an event occurring at the forwarding processor, the method optionally comprising generating a packet comprising the information and wherein the information is forwarded in step (b) and/or step (c) by forwarding the generated packet.

5. A method as claimed in claim 1, comprising performing any reconfiguration required in the forwarding processor as a result of the processing performed by the forwarding processor.

6. A method as claimed in any preceding claim, comprising using a notification procedure, separate from that involving step (c), to notify the information to the at least one other forwarding processor not already in receipt of the information, for example if the receiving forwarding processor is unable to access or use the information received as a result of step (c).

7. A method as claimed in any preceding claim, wherein at least part of the processing is performed by a processing unit separate from the forwarding processor, and comprising forwarding the information to the processing unit for processing.

8. A method as claimed in any preceding claim, wherein the information received in step (a) requires dissemination by multicasting, and wherein step (b) comprises multicasting the packet.

9. A forwarding processor for use in a router comprising a plurality of forwarding processors, the forwarding processor being configured for routing packets to and from other routers, and the apparatus comprising means for or one or more processors arranged for: (a) receiving information which requires dissemination to other routers and processing to determine what, if any, reconfiguration of the routing performed by the forwarding processor is required; and, if an expedited dissemination procedure is required, performing steps (b) and (c) before such processing has been performed and/or before the forwarding processor has been informed of the result of such processing and/or before any reconfiguration required in the forwarding processor has been requested, arranged or performed: (b) forwarding the information in a packet to other routers as required according to a routing configuration for the forwarding processor based on one of a bidirectional multicast on a sole spanning tree, multicasting on a pair of redundant spanning trees and flooding through multicast; and (c) forwarding the information to at least one other forwarding processor in the router not already in receipt of the information
the forwarding processor further comprising means for performing at least part of the processing and using a notification procedure to notify the result of the processing performed by the forwarding processor to at least one other forwarding processor receiving the information, for example so that processing of the information at the receiving forwarding processor is not required.

10. A router comprising a forwarding processor as claimed in claim 9.

11. A program for controlling an apparatus to perform a method as claimed in any one of claims 1 to 8, optionally being carried on a carrier medium such as a storage medium or a transmission medium.

12. A storage medium containing a program as claimed in claim 11.

## Patentansprüche

1. Verfahren zur Verwendung durch einen Weiterleitungsprozessor in einem Router, der eine Vielzahl von Weiterleitungsprozessoren umfasst, wobei der Weiterleitungsprozessor für die Leitweglenkung von Paketen zu und von anderen Routern konfiguriert ist, und wobei das Verfahren umfasst:
(a) Empfangen von Information, die Weiterverbreitung zu anderen Routern erfordert, und Verarbeiten, um zu bestimmen, ob und, wenn ja, welche Neukonfiguration der durch die erste Verarbeitungseinheit durchgeführten Leitweglenkung erforderlich ist; und
wenn eine Prozedur der beschleunigten Weiterverbreitung erforderlich ist, Durchführen der Schritte (b) und (c), bevor eine solche Verarbeitung durchgeführt worden ist und/oder der Weiterleitungsprozessor über das Ergebnis solcher Verarbeitung informiert worden ist und/oder bevor jegliche im Weiterleitungsprozessor erforderliche Neukonfiguration angefordert, eingerichtet oder durchgeführt worden ist:
(b) Weiterleiten der Information in einem Paket zu anderen Routern, wie es gemäß einer Weiterleitungskonfiguration für den Weiterleitungsprozessor erforderlich ist, und zwar auf der Grundlage eines der Folgenden: ein Zweirichtungs-Gruppenruf auf einem einzelnen Spannbaum, Gruppenruf auf einem Paar von redundanten Bäumen und Flooding durch Gruppenruf; und
(c) Weiterleiten der Information zu mindestens einem Weiterleitungsprozessor im Router, der nicht schon im Empfänger der Information steht,
wobei das Verfahren ferner umfasst: Durchführen zumindest eines Teils der Verarbeitung im Weiterleitungsprozessor und Verwenden einer Benachrichtigungsprozedur, um das Ergebnis der durch den Weiterleitungsprozessor durchgeführten Verarbeitung mindestens einem anderen die Information empfangenden Weiterleitungsprozessor mitzuteilen, zum Beispiel so, dass eine Verarbeitung der Information im empfangenden Weiterleitungsprozessor nicht erforderlich ist.

2. Verfahren nach Anspruch 1, worin mindestens einer der Schritte (b) und (c) durchgeführt wird, bevor die Verarbeitung angefordert oder eingerichtet worden ist.

3. Verfahren nach Anspruch 1 oder 2, worin die Information in Schritt (a) in einem Paket von einem anderen Router empfangen wird, und optional umfassend: mit Bezug auf eine IP-Adresse des empfangenen Pakets erfolgendes Bestimmen, ob die Prozedur der beschleunigten Weiterverbreitung erforderlich ist, indem zum Beispiel bestimmt wird, dass die Prozedur der beschleunigten Weiterverbreitung erforderlich ist, wenn die IP-Adresse eine vorbestimmte IP-Adresse, wie etwa eine vorbestimmte Gruppenruf-IP-Adresse, ist.

4. Verfahren nach Anspruch 1 oder 2, worin die in Schritt (a) empfangene Information intern als Antwort auf ein im Weiterleitungsprozessor auftretendes Ereignis erzeugt wird, wobei das Verfahren optional das Erzeugen eines die Information umfassenden Pakets umfasst und worin die Information in Schritt (b) und/oder Schritt (c) durch Weiterleiten des erzeugten Pakets weitergeleitet wird.

5. Verfahren nach Anspruch 1, umfassend: Durchführen jeglicher im Weiterleitungsprozessor erforderlichen Neukonfiguration als Ergebnis der durch den Weiterleitungsprozessor durchgeführten Verarbeitung.

6. Verfahren nach einem der vorhergehenden Ansprüche, umfassend: Verwenden einer Benachrichtigungsprozedur, getrennt von derjenigen, die mit Schritt (c) einhergeht, um die Information dem mindestens einen Weiterleitungsprozessor mitzuteilen, der nicht schon im Empfänger der Information steht, zum Beispiel wenn der empfangende Weiterleitungsprozessor außerstande ist, auf die als Ergebnis von Schritt (c) empfangene Information zuzugreifen oder sie zu verwenden.

7. Verfahren nach einem der vorhergehenden Ansprüche, worin zumindest ein Teil der Verarbeitung durch eine vom Weiterleitungsprozessor getrennte Verarbeitungseinheit durchgeführt wird, und umfassend: Weiterleiten der Information zur Verarbeitung zu der Verarbeitungseinheit.

8. Verfahren nach einem der vorhergehenden Ansprüche, worin die in Schritt (a) empfangene Information Weiterverbreitung durch Gruppenruf erfordert und worin Schritt (b) umfasst: Senden des Pakets per Gruppenruf.

9. Weiterleitungsprozessor zur Verwendung in einem Router, der eine Vielzahl von Weiterleitungsprozessoren umfasst, wobei der Weiterleitungsprozessor für die Leitweglenkung von Paketen zu und von anderen Routern konfiguriert ist, und wobei die Vorrichtung Mittel für einen oder mehrere Prozessoren umfasst, die eingerichtet sind zum:
(a) Empfangen von Information, die Weiterverbreitung zu anderen Routern erfordert, und Verarbeiten, um zu bestimmen, ob und, wenn ja, welche Neukonfiguration der durch den Weiterleitungsprozessor durchgeführten Leitweglenkung erforderlich ist;
und
wenn eine Prozedur der beschleunigten Weiterverbreitung erforderlich ist, Durchführen der Schritte (b) und (c), bevor eine solche Verarbeitung durchgeführt worden ist und/oder der Weiterleitungsprozessor über das Ergebnis solcher Verarbeitung informiert worden ist und/oder bevor jegliche im Weiterleitungsprozessor erforderliche Neukonfiguration angefordert, eingerichtet oder durchgeführt worden ist:
(b) Weiterleiten der Information in einem Paket zu anderen Routern, wie es gemäß einer Weiterleitungskonfiguration für den Weiterleitungsprozessor erforderlich ist, und zwar auf der Grundlage eines der Folgenden: ein Zweirichtungs-Gruppenruf auf einem einzelnen Spannbaum, Gruppenruf auf einem Paar von redundanten Spannbäumen und Flooding durch Gruppenruf; und
(c) Weiterleiten der Information zu mindestens einem Weiterleitungsprozessor im Router, der nicht schon im Empfänger der Information steht,
wobei der Weiterleitungsprozessor ferner Mittel umfasst, um zumindest einen Teil der Verarbeitung durchzuführen und eine Benachrichtigungsprozedur zu verwenden, um das Ergebnis der durch den Weiterleitungsprozessor durchgeführten Verarbeitung mindestens einem anderen die Information empfangenden Weiterleitungsprozessor mitzuteilen, zum Beispiel so, dass eine Verarbeitung der Information im empfangenden Weiterleitungsprozessor nicht erforderlich ist.

10. Router, umfassend einen Weiterleitungsprozessor nach Anspruch 9.

11. Programm zum Steuern einer Vorrichtung, um ein Verfahren nach einem der Ansprüche 1 bis 8 durchzuführen, optional auf einem Trägermedium wie etwa einem Speichermedium oder einem Übertragungsmedium getragen.

12. Speichermedium, das ein Programm nach Anspruch 11 enthält.

## Revendications

1. Procédé destiné à être utilisé par un processeur de transfert dans un routeur comprenant une pluralité de processeurs de transfert, le processeur de transfert étant configuré de manière à acheminer des paquets vers et depuis d'autres routeurs, et le procédé consistant à :
(a) recevoir des informations qui requièrent une distribution à d'autres routeurs et un traitement visant à déterminer, le cas échéant, quelle reconfiguration de l'acheminement mis en oeuvre par la première unité de traitement est requise; et
si une procédure de distribution accélérée est requise, mettre en oeuvre les étapes (b) et (c) avant qu'un tel traitement n'ait été mis en oeuvre, et/ou avant que le processeur de transfert n'ait été informé du résultat d'un tel traitement, et/ou avant qu'une quelconque reconfiguration requise dans le processeur de transfert n'ait été demandée, agencée ou mise en oeuvre :
(b) transférer les informations contenues dans un paquet à d'autres routeurs, tel que requis selon une configuration d'acheminement pour le processeur de transfert, sur la base de l'une parmi une multidiffusion bidirectionnelle sur un unique arbre de recouvrement, une multidiffusion sur une paire d'arbres redondants, et une inondation par multidiffusion ; et
(c) transférer les informations à au moins un autre processeur de transfert, dans le routeur, n'ayant pas encore reçu les informations ;
le procédé consistant en outre à mettre en oeuvre au moins une partie du traitement au niveau du processeur de transfert, et à faire appel à une procédure de notification visant à notifier le résultat du traitement mis en oeuvre par le processeur de transfert à au moins un autre processeur de transfert recevant les informations, par exemple de sorte que le traitement des informations au niveau du processeur de transfert récepteur n'est pas requis.

2. Procédé selon la revendication 1, dans lequel au moins l'une des étapes (b) et (c) est mise en oeuvre avant que le traitement n'ait été demandé ou agencé.

3. Procédé selon la revendication 1 ou 2, dans lequel les informations de l'étape (a) sont reçues dans un paquet en provenance d'un autre routeur, et consistant facultativement à déterminer si la procédure de distribution accélérée est requise en référence à une adresse IP du paquet reçu, par exemple à déterminer que la procédure de distribution accélérée est requise si l'adresse IP est une adresse IP prédéterminée, par exemple une adresse IP de multidiffusion prédéterminée.

4. Procédé selon la revendication 1 ou 2, dans lequel les informations reçues à l'étape
(a) sont générées en interne en réponse à un événement se produisant au niveau du processeur de transfert, le procédé consistant facultativement à générer un paquet comprenant les informations, et dans lequel les informations sont transférées, à l'étape (b) et/ou à l'étape (c), en transférant le paquet généré.

5. Procédé selon la revendication 1, consistant à mettre en oeuvre une quelconque reconfiguration requise dans le processeur de transfert suite au traitement mis en oeuvre par le processeur de transfert.

6. Procédé selon l'une quelconque des revendications précédentes, consistant à faire appel à une procédure de notification, distincte de celle impliquant l'étape (c), en vue de notifier les informations à au moins un autre processeur de transfert n'ayant pas encore reçu les informations, par exemple si le processeur de transfert récepteur n'est pas apte à accéder aux, ou à utiliser les informations reçues à l'issue de l'étape (c).

7. Procédé selon l'une quelconque des revendications précédentes, dans lequel au moins une partie du traitement est mise en oeuvre par une unité de traitement distincte du processeur de transfert, et consistant à transférer les informations à l'unité de traitement en vue de leur traitement.

8. Procédé selon l'une quelconque des revendications précédentes, dans lequel les informations reçues à l'étape (a) requièrent une distribution par multidiffusion, et dans lequel l'étape (b) consiste à multidiffuser le paquet.

9. Processeur de transfert destiné à être utilisé dans un routeur comprenant une pluralité de processeurs de transfert, le processeur de transfert étant configuré de manière à acheminer des paquets vers et depuis d'autres routeurs, et l'appareil comprenant des moyens pour un ou plusieurs processeurs agencés de manière à :
(a) recevoir des informations qui requièrent une distribution à d'autres routeurs et un traitement visant à déterminer, le cas échéant, quelle reconfiguration de l'acheminement mis en oeuvre par le processeur de transfert est requise; et
si une procédure de distribution accélérée est requise, mettre en oeuvre les étapes (b) et (c) avant qu'un tel traitement n'ait été mis en oeuvre, et/ou avant que le processeur de transfert n'ait été informé du résultat d'un tel traitement, et/ou avant qu'une quelconque reconfiguration requise dans le processeur de transfert n'ait été demandée, agencée ou mise en oeuvre :
(b) transférer les informations contenues dans un paquet à d'autres routeurs, tel que requis selon une configuration d'acheminement pour le processeur de transfert, sur la base de l'une parmi une multidiffusion bidirectionnelle sur un unique arbre de recouvrement, une multidiffusion sur une paire d'arbres redondants, et une inondation par multidiffusion ; et
(c) transférer les informations à au moins un autre processeur de transfert, dans le routeur, n'ayant pas encore reçu les informations ;
le processeur de transfert comportant en outre des moyens pour mettre en oeuvre au moins une partie du traitement, et faire appel à une procédure de notification visant à notifier le résultat du traitement mis en oeuvre par le processeur de transfert à au moins un autre processeur de transfert recevant les informations, par exemple de sorte que le traitement des informations au niveau du processeur de transfert récepteur n'est pas requis.

10. Routeur comprenant un processeur de transfert selon la revendication 9.

11. Programme destiné à commander à un appareil de mettre en oeuvre un procédé selon l'une quelconque des revendications 1 à 8, facultativement mis en oeuvre sur un support porteur tel qu'un support de stockage ou un support de transmission.

12. Support de stockage contenant un programme selon la revendication 11.
